# FASCICULE DE BREVET EUROPEEN

(11) **EP 3 319 498 B1**
(45) Date de publication et mention de la délivrance du brevet: **12.06.2019**
(21) Numéro de dépôt: 16742370.6
(22) Date de dépôt: 04.07.2016
(51) Int. Cl.: A47J 45/10, A47J 45/07

(54) **POIGNEE AMOVIBLE MUNIE D'UN SYSTEME D'OUVERTURE A DEUX BOUTONS PIVOTANTS**
ABNEHMBARER GRIFF MIT EINEM ÖFFNUNGSSYSTEM MIT ZWEI WIPPKNÖPFEN
REMOVABLE HANDLE PROVIDED WITH AN OPENING SYSTEM WITH TWO ROCKER BUTTONS

(30) Priorité: 08.07.2015 FR 1556468
(43) Date de publication de la demande: 16.05.2018
(73) Titulaire: SEB S.A., 69130 Ecully (FR)
(72) Inventeur: MONTGELARD, Michel, 73100 Aix Les Bains (FR)
(74) Mandataire: Bourrières, Patrice
(86) Numéro de dépôt international: PCT/FR2016/051689
(87) Numéro de publication internationale: WO 2017/006039

(56) Documents cités:
- EP-A2- 1 991 098

## Description

La présente invention concerne une poignée amovible destinée à coopérer avec un récipient de cuisson, le récipient de cuisson tel une casserole ou un fait-tout, ayant une paroi latérale qui est prolongée vers le haut par une portion recourbée vers l'extérieur.

On notera que, dans ce document, les termes «longitudinal», «transversal», «horizontal », «vertical», «inférieur», supérieur», «haut», «bas», employés pour décrire la poignée amovible, font référence à cette poignée en situation d'usage, lorsqu'elle est montée sur une paroi latérale d'un récipient de cuisson, lequel est posé sur un plan horizontal.

Il est connu, du brevet EP1991098, une poignée amovible destinée à coopérer avec un récipient de cuisson ayant une paroi latérale. La poignée amovible s'étend selon une direction longitudinale et comprend un mors fixe formant un organe d'appui fixe destiné à venir contre la paroi latérale et un mors mobile en translation entre une position ouverte et une position fermée, dans laquelle la poignée amovible est immobilisée sur la paroi latérale. La poignée amovible comporte un levier pivotant de déplacement du mors mobile, configuré de façon à pouvoir passer d'une position stable de fermeture à une position stable d'ouverture, et inversement, en passant par une position intermédiaire d'équilibre instable, et des moyens d'ouverture du mors mobile adaptés à entrainer le levier initialement dans sa position de fermeture au-delà de sa position intermédiaire d'équilibre instable. Les moyens d'ouvertures comportent deux boutons qui sont disposés sur un côté longitudinal de la poignée amovible, et qui sont montés coulissants selon une direction de déplacement transversale à la direction longitudinale.

Une telle poignée formant un ensemble relativement compact, les courses des boutons coulissants sont faibles. Ainsi, les efforts d'appui sur les boutons nécessaires pour faire passer le levier de la position de fermeture au-delà de positon intermédiaire d'équilibre instable sont importants.

Une telle poignée comporte des moyens de manoeuvre du mors mobile à genouillère comportant le levier et un ressort destiné à adapter la position de fermeture du mors mobile à plusieurs épaisseurs de parois latérales. Lorsque l'épaisseur de la paroi latérale est proche du maximum admissible, les efforts d'appui sur les boutons nécessaires pour faire passer le levier de la position de fermeture au-delà de positon intermédiaire d'équilibre instable sont encore plus importants.

Le but de la présente invention est de remédier aux inconvénients précités et de proposer une poignée amovible destinée à coopérer avec un récipient de cuisson présentant une ergonomie améliorée pour permettre à l'utilisateur d'assembler et de séparer facilement la poignée amovible du récipient de cuisson, en toute sécurité.

Un autre but de l'invention est de proposer une poignée amovible qui soit de conception simple et économique à mettre en oeuvre.

Ces buts sont atteints avec une poignée amovible destinée à coopérer avec un récipient de cuisson ayant une paroi latérale, ladite poignée amovible s'étendant selon une direction longitudinale et comprenant au moins un organe d'appui fixe destiné à venir contre la paroi latérale et un organe de verrouillage, mobile entre une position ouverte et une position fermée, dans laquelle la poignée amovible est immobilisée sur la paroi latérale, la poignée amovible comportant des moyens de déplacement de l'organe de verrouillage configurés de façon à pouvoir passer d'une position stable de fermeture à une position stable d'ouverture, et inversement, en passant par une position intermédiaire d'équilibre instable, et des moyens d'ouverture de l'organe de verrouillage adaptés à entrainer les moyens de déplacement initialement dans leur position de fermeture au-delà de leur position intermédiaire d'équilibre instable, caractérisée en ce que les moyens d'ouverture comprennent des premier et deuxième boutons pivotants entre une position de repos et une position d'activation pour faire passer les moyens de déplacement de leur position de fermeture au-delà de leur position intermédiaire d'équilibre instable, en ce que le premier bouton est adapté, quand il est déplacé de sa position de repos à sa position d'activation sous l'action d'un couple fourni par l'utilisateur, à appliquer une première force sur les moyens de déplacement pour les faire passer de la position de fermeture à une position d'amorçage qui est comprise entre la position de fermeture et la position intermédiaire d'équilibre instable, et en ce que le deuxième bouton est adapté, quand il est déplacé de sa position de repos à sa position d'activation sous l'action d'un couple fourni par l'utilisateur, à appliquer une deuxième force sur les moyens de déplacement pour les faire passer de la position d'amorçage au-delà de la position intermédiaire d'équilibre instable.

Une poignée amovible est destinée à être tenue dans la main d'un utilisateur et présente donc une construction compacte. Les moyens de déplacement formés par deux boutons pivotants permettent d'obtenir un déplacement important, en deux courses, des moyens de déplacement lorsque les boutons sont manoeuvrés de la position de repos à la position d'activation. La première course est provoquée principalement par la rotation du premier bouton et la deuxième course est provoquée par la rotation du deuxième bouton.

Avantageusement, sous l'action d'un même couple fourni par l'utilisateur aux premier et deuxième boutons, la première force appliquée sur les moyens de déplacement est supérieure à la deuxième force sur les moyens de déplacement.

La première force nécessaire pour faire passer les moyens de déplacement de la position de fermeture à la position d'amorçage est importante et s'applique sur la première course des moyens de déplacement. La deuxième force nécessaire pour faire passer les moyens de déplacement de la position d'amorçage au-delà de la position intermédiaire d'équilibre instable est inférieure à la première force et s'applique sur une deuxième course des moyens de déplacement.

De préférence, les premier et deuxième boutons comportent respectivement un bras de levier court et un bras de levier long, le bras de levier court étant adapté à appliquer la première force sur les moyens de déplacement et le bras de levier long étant adapté à appliquer la deuxième force sur les moyens de déplacement.

Un couple fourni par l'utilisateur sur le premier bouton quand il est déplacé de sa position de repos à sa position d'activation est transmis par le bras de levier court pour appliquer, sur la première course courte, la première force importante sur les moyens de déplacement pour les faire passer de la position de fermeture à la position d'amorçage. Le même couple fourni par l'utilisateur sur le deuxième bouton quand il est déplacé de sa position de repos à sa position d'activation est transmis par le bras de levier long pour appliquer, sur la deuxième course longue, la deuxième force plus faible mais suffisante sur les moyens de déplacement pour les faire passer de la position d'amorçage au-delà de la position intermédiaire d'équilibre instable.

De manière avantageuse, le bras de levier long est configuré pour que l'entrainement du deuxième bouton seul vers sa position d'activation pour faire passer les moyens de déplacement de leur position de fermeture à leur position d'amorçage nécessite un couple très important sur le deuxième bouton rendant son pivotement très difficile.

Ainsi, le couple à mettre en oeuvre pour manoeuvrer uniquement le deuxième bouton est trop important pour faire passer les moyens de déplacement de leur position de fermeture à leur position d'amorçage.

De plus, l'entrainement du premier bouton seul vers sa position d'activation fait passer les moyens de déplacement de leur position de fermeture dans leur position d'amorçage mais pas dans leur position d'ouverture.

En conséquence, les premier et deuxième boutons doivent être déplacés en même temps jusque dans leur position d'activation pour déplacer les moyens de déplacement dans leur position d'ouverture. De ce fait, si, suite à un choc de la poignée amovible contre un élément quelconque, l'un des premier ou deuxième boutons est heurté de façon être entraîné vers sa position d'activation, les moyens de déplacement ne seront pas déplacés dans leur position d'ouverture.

Avantageusement, les bras de levier court et long comprennent respectivement des première et deuxième extrémités d'entraînement qui, quand elles sont déplacées de leur position de repos à leur position d'activation, sont adaptées à venir en contact contre une surface de réception portée par les moyens de déplacement et à déplacer cette surface de réception de façon à entraîner les moyens de déplacement dans leur position d'ouverture.

Ainsi, un débattement du premier bouton sur sa course se transforme en un débattement de la première extrémité d'entrainement sur une course réduite permettant de repousser les moyens de déplacement à la position d'amorçage. Un débattement du deuxième bouton sur une course plus faible se transforme en un débattement de la deuxième extrémité sur une course importante permettant de repousser les moyens de déplacement au-delà de la position intermédiaire d'équilibre instable.

De préférence, les moyens de déplacement comprennent un levier mobile selon un axe de pivotement s'étendant selon une direction transversale à la direction longitudinale, entre une position de fermeture et une position d'ouverture en passant par une position intermédiaire d'équilibre instable.

Les trois positions du levier correspondant, respectivement, à la position de fermeture, d'ouverture et d'équilibre instable des moyens de déplacement.

Un tel levier mobile permet d'obtenir des moyens de déplacement de l'organe de verrouillage simples et faciles à manoeuvrer.

Avantageusement, la surface de réception est portée par le levier.

Ainsi, les premier et deuxième boutons agissent directement sur le levier par l'intermédiaire des bras de levier court et long.

De préférence, les premier et deuxième boutons sont pivotants, respectivement, autour d'un axe parallèle à la direction longitudinale, les premier et deuxième boutons étant disposés sur des premier et deuxième côtés longitudinaux de la poignée amovible.

La poignée amovible peut être tenue dans la paume de la main et les premier et deuxième boutons peuvent être manoeuvrés par pinçage entre le pouce et l'index. On obtient ainsi un déverrouillage ergonomique de la poignée amovible.

Avantageusement, les premier et deuxième boutons comportent des première et deuxième ailes de manoeuvre des bras de levier court et long.

De préférence, les première et deuxième ailes dans la position de repos forment avec un axe vertical, dans un plan de coupe transversal à l'axe longitudinal, un angle compris entre 40 et 50°, de préférence 45°.

Cette disposition permet d'obtenir une position optimum du pouce et de l'index de l'utilisateur pour appliquer par pinçage un effort de manière sensiblement perpendiculaire à chacune des première et deuxième ailes.

Avantageusement, les première et deuxième ailes sont pivotantes sur une course angulaire entre la position de repos et la position d'activation comprise entre 40 et 50°, de préférence 45°.

Ainsi, les première et deuxième ailes sont sensiblement verticales dans la position d'activation.

De préférence, le rapport de la longueur de la première aile sur la longueur du bras de levier court est supérieur ou égal à 1 et en ce que le rapport de la longueur de la deuxième aile sur la longueur du bras de levier long est inférieur ou égal à 0,8.

Par longueur de la première aile, on comprend la distance mesurée entre l'axe de rotation du premier bouton et l'extrémité de l'aile. Par longueur du bras de levier court, on comprend la distance mesurée entre l'axe de rotation du premier bouton et l'extrémité du bras de levier court.

Une telle construction des moyens de manoeuvre permet d'optimiser les efforts mis en oeuvre par l'utilisateur.

Avantageusement, les moyens de manoeuvre comportent une bielle et un ressort, le ressort étant destiné à adapter la position de l'organe de verrouillage à l'épaisseur de la paroi latérale.

Cette disposition permet d'obtenir des moyens de manoeuvre de l'organe de verrouillage très ergonomiques. De plus de tels moyens permettent d'adapter la position de l'organe de verrouillage à l'épaisseur de la paroi latérale.

L'invention concerne également un ensemble formé par au moins un récipient de cuisson comportant une paroi latérale qui est prolongée vers le haut par une portion recourbée vers l'extérieur et comportant une extrémité libre munie d'une arête supérieure et d'une arête inférieure, et une poignée amovible telle que précédemment décrite.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'une poignée amovible selon un mode particulier de réalisation de l'invention,
- la figure 2 est une vue en perspective éclatée de la poignée amovible de la figure 1,
- la figure 3 est une vue partielle de la pièce de structure et du verrou de la poignée amovible suivant le plan de coupe III de la figure 1, la poignée amovible étant assemblée à un récipient de cuisson, partiellement représenté,
- la figure 4 est une vue du dessus de la pièce de structure, du verrou et du récipient de cuisson de la figure 3,
- la figure 5 est une vue en coupe de la poignée amovible suivant le plan de coupe V de la figure 1, le verrou étant en position fermée,
- la figure 6 est une vue en coupe de la poignée amovible suivant le plan de coupe V de la figure 1, le verrou étant en position ouverte,
- la figure 7 est une vue en coupe de la poignée amovible suivant le plan de coupe VII de la figure 5, le levier étant dans la position de fermeture,
- la figure 8 est une vue en coupe de la poignée amovible suivant le plan de coupe VII de la figure 5, le levier étant dans la position d'amorçage,
- la figure 9 est une vue en coupe de la poignée amovible suivant le plan de coupe IX de la figure 6, le levier étant dans la position d'ouverture.

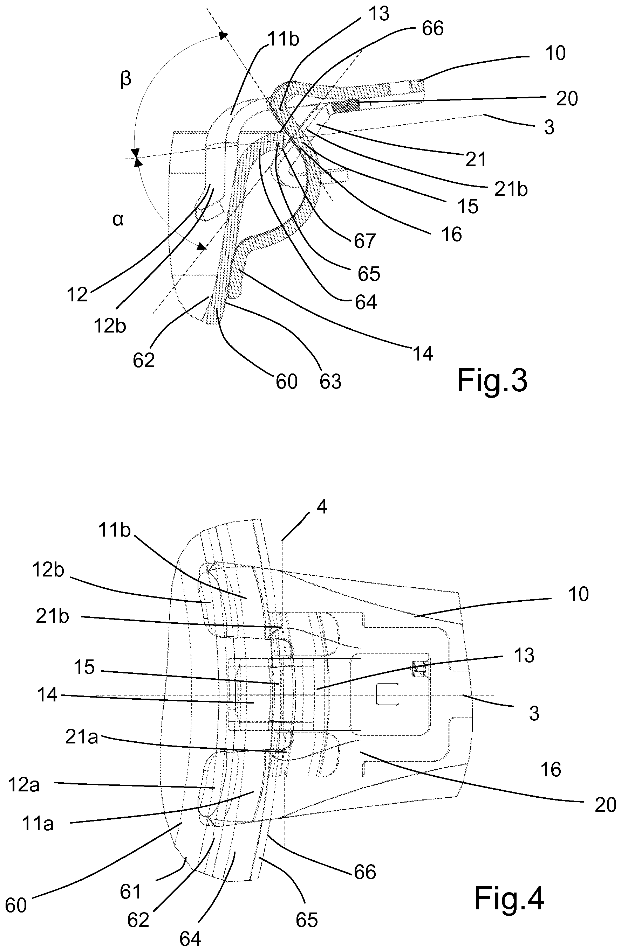

Une poignée amovible 1 est destinée à coopérer avec un récipient de cuisson 60, tel qu'illustré partiellement aux figures 3 et 4, qui comprend une paroi de fond horizontale, une paroi latérale 61 se dressant depuis la paroi de fond, et une portion recourbée 64 qui s'étend vers l'extérieur. La paroi latérale 61 comporte une surface intérieure 62 et une surface extérieure 63. La portion recourbée 64 prolonge la paroi latérale 61 et délimite l'ouverture supérieure du récipient de cuisson 60. La portion recourbée 64 comprend une extrémité libre 65 munie d'une arête supérieure 66 et d'une arête inférieure 67. Les arêtes supérieure 66 et inférieure 67 sont de préférence superposées dans un plan vertical.

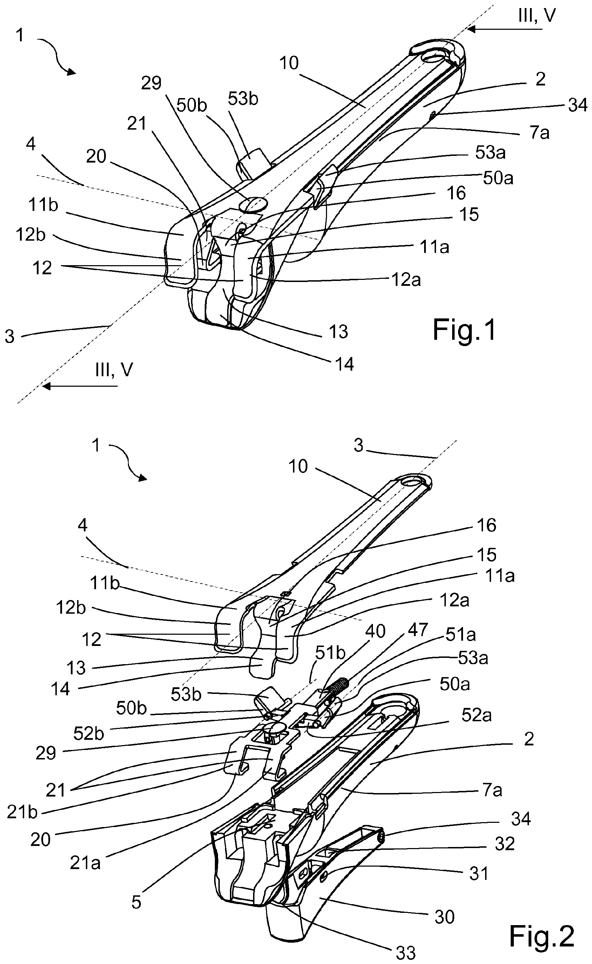

Conformément aux figures 1 à 4, la poignée amovible 1 comporte un corps de préhension 2 sur lequel est agencé une pièce de structure 10. La poignée amovible 1 s'étend selon une direction longitudinale 3. La pièce de structure 10 est une pièce métallique sensiblement plane qui comporte à une extrémité une patte centrale 13 et deux pattes latérales 11a, 11b.

La patte centrale 13 s'étend vers le bas et comprend à une extrémité un organe d'appui externe 14 destiné à coopérer avec la surface extérieure 63 de la paroi latérale 61. Dans un plan de coupe vertical orienté selon la direction longitudinale 3, l'organe d'appui externe 14 est sensiblement vertical. La patte centrale 13 comporte également un organe d'appui supérieur 15 comprenant une face d'appui 16 destinée à coopérer avec l'arête supérieure 66 de l'extrémité libre 65. La face d'appui 16 est inclinée par rapport à la direction longitudinale 3. Dans un plan de coupe vertical orienté selon la direction longitudinale 3, une droite appartenant à la face d'appui 16 inclinée et la direction longitudinale 3 forment un angle β d'environ 60° (Fig.3).

Les deux pattes latérales 11a, 11b sont agencées de part et d'autre de la patte centrale 13 dans une direction transversale 4 à la direction longitudinale 3. Les deux pattes latérales 11a, 11b s'étendent vers le bas et comportent à leur extrémité respective, des première et deuxième zones d'appui 12a, 12b formant un organe d'appui interne 12 destiné à coopérer avec la surface intérieure 32 de la paroi latérale 61.

Les première et deuxième zones d'appui 12a, 12b formant l'organe d'appui interne 12 et l'organe d'appui externe 14 sont décalées selon un axe vertical pour permettre l'introduction de la paroi latérale 61 et de l'extrémité libre 65 lors de l'assemblage de la poignée amovible 1 sur le récipient de cuisson 60.

La poignée amovible 1 comporte un organe de verrouillage formé par un verrou 20 mobile en translation selon la direction longitudinale 3 entre une position ouverte et une position fermée. Le verrou 20 comporte une paroi de blocage 21 comprenant des première et deuxième parties d'appui 21a, 21b, agencées de part et d'autre de la patte centrale 13.

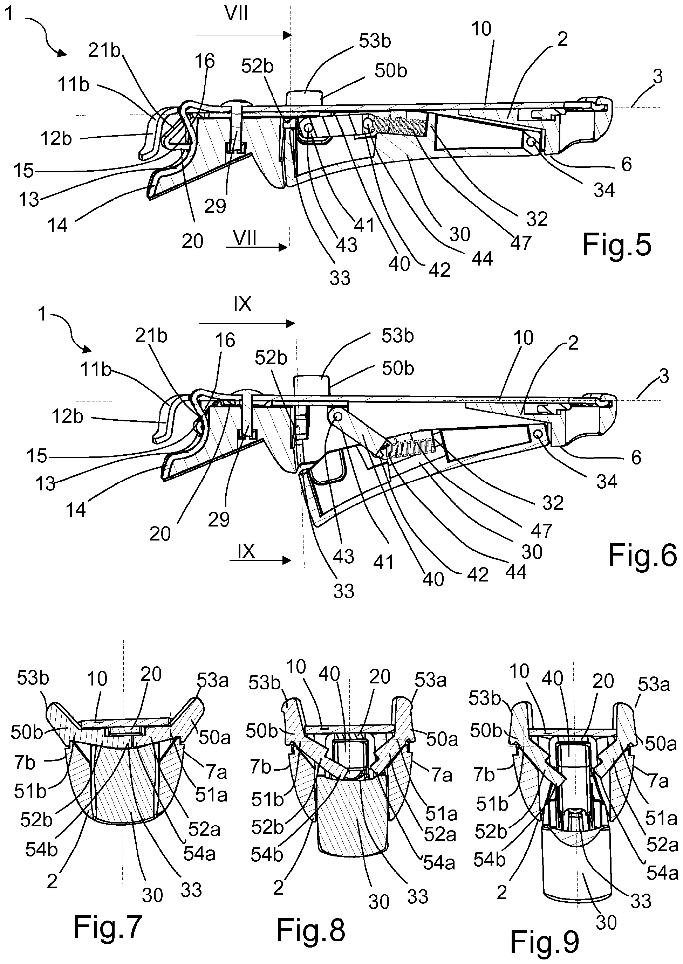

Tel que visible à la figure 6, dans la position ouverte du verrou 20, les première et deuxième parties d'appui 21a, 21b formant la paroi de blocage 21 sont destinées à être éloignées de l'organe d'appui supérieur 15 pour permettre l'introduction de la paroi latérale 61 entre les organes d'appui interne 12 et externe 14 et permettre à l'arête supérieure 66 de l'extrémité libre 65 de venir contre l'organe d'appui supérieur 15.

Tel que visible aux figures 3 et 5, dans la position fermée du verrou 20, les première et deuxième parties d'appui 21a, 21b formant la paroi de blocage 21 sont destinées à prendre appui contre l'arête inférieure 67 de l'extrémité libre 65 et ainsi bloquer l'arête supérieure 66 contre l'organe d'appui supérieur 15 (fig.3). Dans un plan de coupe vertical comprenant la direction longitudinale 3, une droite appartenant à la paroi de blocage 21 et la direction longitudinale forment un angle α compris entre 40 et 50°, de préférence 45°.

Le corps de préhension 2 comporte un logement 5 de réception et de guidage du verrou 20 (Fig.2). La pièce de structure 10 est agencée au-dessus du logement 5 et est fixée sur le corps de préhension 2 par une vis 29.

Conformément aux figures 5 et 6, La poignée amovible 1 comporte des moyens de déplacement de l'organe de verrouillage formé par le verrou 20. Les moyens de déplacement comporte un levier 30 qui est monté pivotant sur le corps de préhension 2 selon un axe de pivotement 34 s'étendant selon la direction transversale 4, perpendiculaire à la direction longitudinale 3, et une bielle 40 qui permet le déplacement du verrou 20 quand le levier 30 est pivoté. La bielle 40 est montée de façon pivotante, par une première extrémité 41 au verrou 20 selon un axe 43, et par une seconde extrémité 42 au levier 30 selon un axe 44 qui est monté coulissant dans une ouverture oblongue 31 réalisée dans le levier 30.

Le levier 30 est disposé sur une face inférieure 6 du corps de préhension 2 et est mobile entre une position de fermeture et une position d'ouverture en passant par une position intermédiaire d'équilibre instable. En outre, les moyens de déplacement comprennent également un ressort 47 qui est disposé entre l'axe 44 monté coulissant et une paroi transversale 32 du levier 30. Ce ressort 47 de compression permet un ajustement de la position du verrou 20 en position fermée à l'épaisseur de la paroi latérale 61 du récipient de cuisson 60.

Conformément à la figure 5, dans la position de fermeture du levier 30, l'axe 44 autour duquel la seconde extrémité 42 pivote est situé au-dessus d'une ligne passant par l'axe de pivotement 34 et l'axe 43. La seconde extrémité 42 est maintenue en contact de la pièce de structure 10 sous l'action du ressort 47 de compression. Ainsi, le verrou 20 reste naturellement dans sa position fermée, sans que l'utilisateur ait à maintenir un quelconque effort sur la poignée amovible 1. La position intermédiaire d'équilibre instable du levier 30 est atteinte lorsque l'axe 44 autour duquel la seconde extrémité 42 pivote, est déplacé sous la ligne passant par l'axe de pivotement 34 et l'axe 43.

Tel que visible sur les figures 7 à 9, la poignée amovible 1 comprend des moyens d'ouverture qui permettent de faire passer le verrou de sa position stable fermée à sa position ouverte. Les moyens d'ouverture comprennent des premier et deuxième boutons 50a, 50b montés pivotants sur le corps de préhension 2, respectivement, autour d'un axe 51a, 51b parallèle à la direction longitudinale 3, les premier et deuxième boutons 50a, 50b étant disposés respectivement sur un premier côté longitudinal 7a et sur un deuxième coté longitudinal 7b du corps de préhension 2. Les premier et deuxième boutons 50a, 50b comportent respectivement un bras de levier court 52a et un bras de levier long 52b et des première et deuxième ailes 53a, 53b qui permettent de manoeuvrer les bras de levier court 52a et long 52b.

Les premier et deuxième boutons 50a, 50b sont pivotants entre une position de repos dans laquelle ils sont sans effet sur le levier 30, et une position d'activation dans laquelle ils sont adaptés à entraîner le levier 30 initialement dans sa position de fermeture au-delà de sa position intermédiaire d'équilibre instable, de sorte qu'une fois cette position franchie, le levier 30 passe naturellement dans sa position stable d'ouverture. Ainsi, le verrou 20 passe naturellement dans sa position ouverte du fait notamment de l'action du ressort 47 de compression qui entraîne le verrou 20, la bielle 40 et le levier 30.

Les premier et deuxième boutons 50a, 50b sont disposés au-dessus du levier 30 et les première et deuxième ailes 53a, 53b font saillie hors des premiers et deuxième cotés longitudinaux 7a, 7b, en partie supérieure du corps de préhension 2. Les bras de levier court 52a et long 52b comportent des première et deuxième extrémités d'entraînement 54a, 54b. Lorsque les premier et deuxième boutons 50a, 50b pivotent entre leur position de repos et leur position d'activation, les bras de levier court 52a et long 52b sont adaptés à venir en contact contre une surface de réception 33 portée par le levier 30. Le bras de levier court 52a est adapté à appliquer une première force pour déplacer la surface de réception 33 de façon à entraîner le levier 30 de la position de fermeture à une position d'amorçage qui est comprise entre la position de fermeture et la position intermédiaire d'équilibre instable. Le bras de levier long 52b est adapté à appliquer une deuxième force pour déplacer la surface de réception 33 de façon à entraîner le levier 30 de la position d'amorçage au-delà de la position intermédiaire d'équilibre instable. Le déplacement du levier 30 de la position de fermeture à la position d'ouverture entraine, par l'intermédiaire de la bielle 40, le verrou 20 dans sa position ouverte.

En fonctionnement, pour désassembler la poignée amovible 1 du récipient de cuisson 60, l'utilisateur saisit le corps de préhension 2 et pince avec le pouce et l'index les première et deuxième ailes 53a, 53b pour déplacer les bras de levier court 52a et long 52b de leur position de repos à leur position d'activation. Ainsi, la première extrémité d'entrainement 54a en agissant sur la surface de réception 33 fait passer le levier 30 de la position de fermeture à la position d'amorçage et la deuxième extrémité d'entrainement 54b en agissant sur la surface de réception 33 fait passer le levier 30 de la position d'amorçage au-delà de la position intermédiaire d'équilibre instable vers la position d'ouverture. Le passage du levier 30 de sa position de fermeture à sa position d'ouverture provoque par l'intermédiaire de la bielle 40 le déplacement du verrou 20 de sa position fermée à sa position ouverte.

Pour assembler la poignée amovible 1 sur le récipient de cuisson 60, l'utilisateur saisit le corps de préhension 2 et suivant le même mode opératoire que celui décrit ci-dessus amène le verrou 20 dans sa position ouverte. Il introduit l'extrémité libre 65 de la portion recourbée 64 entre les deux pattes latérales 11a, 11b et la patte centrale 13 pour amener la surface intérieure 62 de la paroi latérale 61 contre les première et deuxième zones d'appui 12a, 12b formant l'organe d'appui interne 12 et la surface extérieure 63 contre l'organe d'appui externe 14, et également amener l'arête supérieure 66 contre la face d'appui 16. Ensuite, il appuie sur le levier 30 pour le faire passer de sa position d'ouverture à sa position de fermeture et ainsi entrainer le verrou 20 de sa position ouverte à sa position fermée dans laquelle les première et deuxième parties d'appui 21a, 21b formant la paroi de blocage 21 prennent appui contre l'arête inférieure 67 de l'extrémité libre 65 et ainsi bloquent l'arête supérieure 66 contre la face d'appui 16.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, les premier et deuxième boutons sont pivotants, respectivement, autour d'un axe vertical, perpendiculaire à la direction longitudinale, chaque bouton étant disposé sur un côté longitudinal de la poignée amovible qui lui est propre.

## Revendications

1. Poignée amovible (1) destinée à coopérer avec un récipient de cuisson (60) ayant une paroi latérale (61), ladite poignée amovible (1) s'étendant selon une direction longitudinale (3) et comprenant au moins un organe d'appui (12, 14, 15) fixe destiné à venir contre la paroi latérale (61) et un organe de verrouillage (20), mobile entre une position ouverte et une position fermée, dans laquelle la poignée amovible (1) est immobilisée sur la paroi latérale (61), ladite poignée amovible (1) comportant des moyens de déplacement (30) de l'organe de verrouillage (20) configurés de façon à pouvoir passer d'une position stable de fermeture à une position stable d'ouverture, et inversement, en passant par une position intermédiaire d'équilibre instable, et des moyens d'ouverture (50a, 50b) de l'organe de verrouillage (20) adaptés à entrainer les moyens de déplacement (30) initialement dans leur position de fermeture au-delà de leur position intermédiaire d'équilibre instable, **caractérisée en ce que** les moyens d'ouverture comprennent des premier et deuxième boutons (50a, 50b) pivotants entre une position de repos et une position d'activation pour faire passer les moyens de déplacement (30) de leur position de fermeture au-delà de leur position intermédiaire d'équilibre instable, **en ce que** le premier bouton (50a) est adapté, quand il est déplacé de sa position de repos à sa position d'activation sous l'action d'un couple fourni par l'utilisateur, à appliquer une première force sur les moyens de déplacement (30) pour les faire passer de la position de fermeture à une position d'amorçage qui est comprise entre la position de fermeture et la position intermédiaire d'équilibre instable, et **en ce que** le deuxième bouton (50b) est adapté, quand il est déplacé de sa position de repos à sa position d'activation sous l'action d'un couple fourni par l'utilisateur, à appliquer une deuxième force sur les moyens de déplacement (30) pour les faire passer de la position d'amorçage au-delà de la position intermédiaire d'équilibre instable.

2. Poignée amovible (1) selon la revendication 1, **caractérisée en ce que**, sous l'action d'un même couple fourni par l'utilisateur aux premier et deuxième boutons (50a, 50b), la première force appliquée sur les moyens de déplacement (30) est supérieure à la deuxième force sur les moyens de déplacement (30).

3. Poignée amovible (1) selon l'une quelconque des revendications 1 à 2, **caractérisée en ce que** les premier et deuxième boutons (50a, 50b) comportent respectivement un bras de levier court (52a) et un bras de levier long (52b), le bras de levier court (52a) étant adapté à appliquer la première force sur les moyens de déplacement (30) et le bras de levier long (52b) étant adapté à appliquer la deuxième force sur les moyens de déplacement (30).

4. Poignée amovible (1) selon l'une quelconque des revendications 1 à 3, **caractérisée en ce que** les bras de levier court et long (52a, 52b) comprennent respectivement des première et deuxième extrémités d'entraînement (54a, 54b) qui, quand elles sont déplacées de leur position de repos à leur position d'activation, sont adaptées à venir en contact contre une surface de réception (33) portée par les moyens de déplacement (30) et à déplacer cette surface de réception (33) de façon à entraîner les moyens de déplacement (30) dans leur position d'ouverture.

5. Poignée amovible (1) selon l'une quelconque des revendications 1 à 4, **caractérisée en ce que** les moyens de déplacement comprennent un levier (30) mobile selon un axe de pivotement (34) s'étendant selon une direction transversale (4), entre une position de fermeture et une position d'ouverture en passant par une position intermédiaire d'équilibre instable.

6. Poignée amovible (1) selon la revendication 5, dépendante de la revendication 4, **caractérisée en ce que** la surface de réception (33) est portée par le levier (30).

7. Poignée amovible (1) selon l'une quelconque des revendications 1 à 6, **caractérisée en ce que** les premier et deuxième boutons (50a, 50b) sont pivotants, respectivement autour d'un axe (51a, 51b) parallèle à la direction longitudinale (3), les premier et deuxième boutons (50a, 50b) étant disposés sur des premier et deuxième côtés longitudinaux (7a, 7b) de la poignée amovible (1).

8. Poignée amovible (1) selon l'une quelconque des revendications 1 à 7, **caractérisée en ce que** les premier et deuxième boutons (50a, 50b) comportent des première et deuxième ailes (53a, 53b) de manoeuvre des bras de levier court et long (52a, 52b).

9. Poignée amovible (1) selon la revendication 8, **caractérisée en ce que** les première et deuxième ailes (53a, 53b), dans la position de repos, forment avec un axe vertical, dans un plan de coupe transversal à la direction longitudinale (3), un angle compris entre 40 et 50°, de préférence 45°.

10. Poignée amovible (1) selon la revendication 8 ou 9, **caractérisée en ce que** les première et deuxième ailes (53a, 53b) sont pivotantes sur une course angulaire entre la position de repos et la position d'activation comprise entre 40 et 50°, de préférence 45°.

11. Poignée amovible (1) selon l'une quelconque des revendications 8 à 10, **caractérisée en ce que** le rapport de la longueur de la première aile (53a) sur la longueur du bras de levier court (52a) est supérieur ou égal à 1 et **en ce que** le rapport de la longueur de la deuxième aile (53b) sur la longueur du bras de levier long (52b) est inférieur ou égal à 0,8.

12. Poignée amovible (1) selon l'une quelconque des revendications 1 à 11, **caractérisée en ce que** les moyens de manoeuvre comportent une bielle (40) et un ressort (47), ledit ressort (47) étant destiné à adapter la position de l'organe de verrouillage (20) à l'épaisseur de la paroi latérale (61).

## Patentansprüche

1. Abnehmbarer Griff (1), der dazu bestimmt ist, mit einem Kochgefäß (60), das eine Seitenwand (61) hat, zusammenzuwirken, wobei sich der abnehmbare Griff (1) in einer Längsrichtung (3) erstreckt und mindestens ein feststehendes Stützelement (12, 14, 15), das dazu bestimmt ist, gegen die Seitenwand (61) zu kommen, und ein Sperrelement (20) umfasst, das zwischen einer Öffnungsposition und einer Schließposition bewegbar ist, wobei der abnehmbare Griff (1) an der Seitenwand (61) festgelegt ist, wobei der abnehmbare Griff (1) Mittel zur Verschiebung (30) des Verriegelungselements (20), die so konfiguriert sind, dass sie von einer stabilen Verschlussposition in eine stabile Öffnungsposition und umgekehrt übergehen können, wobei sie durch eine Zwischenposition mit instabilem Gleichgewicht laufen, und Öffnungsmittel (50a, 50b) des Verriegelungselements (20) aufweisen, die eingerichtet sind, die Mittel zur Verschiebung (30) anfänglich in ihre geschlossene Position jenseits ihrer Zwischenposition mit instabilem Gleichgewicht anzutreiben, **dadurch gekennzeichnet, dass** die Öffnungsmittel einen ersten und einen zweiten Knopf (50a, 50b) umfassen, die zwischen einer Ruheposition und einer Aktivierungsposition schwenkbar sind, um die Mittel zur Verschiebung (30) aus ihrer Schließposition jenseits ihrer Zwischenposition mit instabilem Gleichgewicht bewegen, dass der erste Knopf (50a) eingerichtet ist, wenn er unter der Wirkung eines von dem Benutzer bereitgestellten Drehmoments von seiner Ruheposition in seine Aktivierungsposition verschoben wird, um eine erste Kraft auf die Mittel zur Verschiebung (30) auszuüben, um diese von der Schließposition zu einer Startposition zu bewegen, die zwischen der Schließposition und Zwischenposition mit instabilem Gleichgewicht liegt, und dass der zweite Knopf (50b) eingerichtet ist, wenn er unter der Wirkung eines von dem Benutzer bereitgestellten Drehmoments von seiner Ruheposition in seine Aktivierungsposition verschoben wird, um eine zweite Kraft auf die Mittel zur Verschiebung (30) anzuwenden, um sie aus der Startposition über die Zwischenposition mit instabilem Gleichgewicht hinaus zu bewegen.

2. AbnehmbarerGriff (1) nach Anspruch 1, **dadurch gekennzeichnet, dass** unter der Wirkung desselben Drehmoments, das der Benutzer dem ersten und dem zweiten Knopf (50a, 50b) zuführt, die erste Kraft, die auf die Mittel zur Verschiebung (30) angewandt wird, größer als die zweite Kraft auf die Mittel zur Verschiebung (30) ist.

3. Abnehmbarer Griff (1) nach einem der Ansprüche 1 bis 2, **dadurch gekennzeichnet, dass** der erste und der zweite Knopf (50a, 50b) jeweils einen kurzen Hebelarm (52a) und einen langen Hebelarm (52b) aufweisen, wobei der kurze Hebelarm (52a) eingerichtet ist, die erste Kraft auf die Mittel zur Verschiebung (30) auszuüben, und wobei der lange Hebelarm (52b) eingerichtet ist, die zweite Kraft auf die Mittel zur Verschiebung (30) auszuüben.

4. Abnehmbarer Griff (1) nach einem der Ansprüche 1 bis 3, **dadurch gekennzeichnet, dass** der kurze und der lange Hebelarm (52a, 52b) jeweils erste und zweite Antriebsenden (54a, 54b) aufweisen, die, wenn sie aus ihrer Ruheposition in ihre Aktivierungsposition bewegt werden, eingerichtet sind, mit einer von den Mitteln zur Verschiebung (30) getragenen Aufnahmeoberfläche (33) in Kontakt zu treten und diese Aufnahmeoberfläche (33) zu verschieben, um die Mittel zur Verschiebung (30) in ihre Öffnungsposition anzutreiben.

5. Abnehmbarer Griff (1) nach einem der Ansprüche 1 bis 4, **dadurch gekennzeichnet, dass** die Mittel zur Verschiebung einen Hebel (30) umfassen, der um eine Schwenkachse (34), die sich in Querrichtung (4) erstreckt, zwischen einer Schließposition und einer Öffnungsposition bewegbar ist, wobei er durch eine Zwischenposition mit instabilem Gleichgewicht läuft.

6. Abnehmbarer Griff (1) nach Anspruch 5, abhängig von Anspruch 4, **dadurch gekennzeichnet, dass** die Aufnahmeoberfläche (33) von dem Hebel (30) getragen wird.

7. Abnehmbarer Griff (1) nach einem der Ansprüche 1 bis 6, **dadurch gekennzeichnet, dass** der erste und der zweite Knopf (50a, 50b) jeweils um eine Achse (51a, 51b) parallel zu der Längsrichtung (3) schwenkbar sind, wobei der erste und der zweite Knopf (50a, 50b) an der ersten und der zweiten Längsseite (7a, 7b) des abnehmbaren Griffs (1) angeordnet sind.

8. Abnehmbarer Griff (1) nach einem der Ansprüche 1 bis 7, **dadurch gekennzeichnet, dass** der erste und der zweite Knopf (50a, 50b) einen ersten und einen zweiten Flügel (53a, 53b) zur Betätigung des kurzen und des langen Hebelarms (52a, 52b) aufweisen.

9. Abnehmbarer Griff (1) nach Anspruch 8, **dadurch gekennzeichnet, dass** der erste und der zweite Flügel (53a, 53b) in der Ruheposition mit einer vertikalen Achse in einer Schnittebene quer zur Längsrichtung (3) einen Winkel zwischen 40 und 50°, vorzugsweise von 45°, bilden.

10. Abnehmbarer Griff (1) nach Anspruch 8 oder 9, **dadurch gekennzeichnet, dass** der erste und der zweite Flügel (53a, 53b) über einen Winkellauf zwischen der Ruheposition und der Aktivierungsposition zwischen 40° und 50°, vorzugsweise um 45°, schwenkbar sind.

11. Abnehmbarer Griff (1) nach einem der Ansprüche 8 bis 10, **dadurch gekennzeichnet, dass** das Verhältnis der Länge des ersten Flügels (53a) zur Länge des kurzen Hebelarms (52a) größer als oder gleich 1 ist, und dass das Verhältnis der Länge des zweiten Flügels (53b) zur Länge des langen Hebelarms (52b) kleiner oder gleich 0,8 ist.

12. Abnehmbarer Griff (1) nach einem der Ansprüche 1 bis 11, **dadurch gekennzeichnet, dass** die Betätigungsmittel eine Pleuelstange (40) und eine Feder (47) aufweisen, wobei die Feder (47) dazu bestimmt ist, die Position des Sperrelements (20) an die Dicke der Seitenwand (61) anzupassen.

## Claims

1. Removable handle (1) intended to cooperate with a cooking vessel (60), having a side wall (61), said removable handle (1) extending along a longitudinal direction (3) and comprising at least one fixed support member (12, 14, 15) intended to bear against the side wall (61) and a locking member (20), mobile between an open position and a closed position, wherein the removable handle (1) is immobilised on the side wall (61), said removable handle (1) comprising means for moving (30) the locking member (20) configured so as to be able to pass from a stable closing position to a stable opening position, and conversely, by passing through an unstable balanced intermediate position, and means for opening (50a, 50b) the locking member (20) adapted to drive the movement means (30) initially into the closing position thereof beyond the unstable balanced intermediate position thereof, **characterised in that** the opening means comprise first and second buttons (50a, 50b) pivoting between an idle position and an activation position to make the movement means (30) pass from the closing position thereof beyond the unstable balanced intermediate position thereof, **in that** the first button (50a) is adapted, when it is moved from the idle position thereof to the activation position thereof under the action of a torque provided by the user, to apply a first force on the movement means (30) to make them pass from the closing position to a starting position which is between the closing position and the unstable balanced intermediate position, and **in that** the second button (50b) is adapted, when it is moved from the idle position thereof to the activation position thereof under the action of a torque provided by the user, to apply a second force on the movement means (30) to make them pass from the starting position beyond the unstable balanced intermediate position.

2. Removable handle (1) according to claim 1, **characterised in that**, under the action of one same torque provided by the user to the first and second buttons (50a, 50b), the first force applied on the movement means (30) is greater than the second force on the movement means (30).

3. Removable handle (1) according to any one of claims 1 to 2, **characterised in that** the first and second buttons (50a, 50b) respectively comprise a short-lever arm (52a) and a long-lever arm (52b), the short-lever arm (52a) being adapted to apply the first force on the movement means (30) and the long-lever arm (52b) being adapted to apply the second force on the movement means (30).

4. Removable handle (1) according to any one of claims 1 to 3, **characterised in that** the short- and long-lever arms (52a, 52b) respectively comprise first and second drive ends (54a, 54b) which, when they are moved from the idle position thereof to the activation position thereof, are adapted to come into contact against a receiving surface (33) carried by the movement means (30) and to move this receiving surface (33) so as to drive the movement means (30) in the opening position thereof.

5. Removable handle (1) according to any one of claims 1 to 4, **characterised in that** the movement means comprise a lever (30), mobile along a pivoting axis (34) extending along a transversal direction (4), between a closing position and an opening position, by passing through an unstable balanced intermediate position.

6. Removable handle (1) according to claim 5, dependent on claim 4, **characterised in that** the receiving surface (33) is carried by the lever (30).

7. Removable handle (1) according to any one of claims 1 to 6, **characterised in that** the first and second buttons (50a, 50b) are pivoting, respectively about an axis (51a, 51b) parallel to the longitudinal direction (3), the first and second buttons (50a, 50b) being arranged on first and second longitudinal sides (7a, 7b) of the removable handle (1).

8. Removable handle (1) according to any one of claims 1 to 7, **characterised in that** the first and second buttons (50a, 50b) comprise first and second wings (53a, 53b) for manoeuvring the short- and long-lever arms (52a, 52b).

9. Removable handle (1) according to claim 8, **characterised in that** the first and second wings (53a, 53b), in the idle position, form with a vertical axis, in a cross-sectional plane in the longitudinal direction (3), an angle of between 40 and 50°, preferably 45°.

10. Removable handle (1) according to claim 8 or 9, **characterised in that** the first and second wings (53a, 53b) are pivoting on an angular course between the idle position and the activation position of between 40 and 50°, preferably 45°.

11. Removable handle (1) according to any one of claims 8 to 10, **characterised in that** the ratio of the length of the first wing (53a) on the length of the short-lever arm (52a) is greater than or equal to 1 and **in that** the ratio of the length of the second wing (53b) on the length of the long-lever arm (52b) is less than or equal to 0.8.

12. Removable handle (1) according to any one of claims 1 to 11, **characterised in that** the manoeuvring means comprise a connecting rod (40) and a spring (47), said spring (47) being intended to adapt the position of the locking member (20) to the thickness of the side wall (61).
